# FASCICULE DE BREVET EUROPEEN

(11) **EP 1 852 634 B1**
(45) Date de publication et mention de la délivrance du brevet: **17.12.2008**
(21) Numéro de dépôt: 07300963.1
(22) Date de dépôt: 19.04.2007
(51) Int. Cl.: F16H 55/17, F16H 57/04

(54) **Agencement pour la lubrification d'un pignon fou**
Anordnung zur Schmierung eines Ritzels
Arrangement for lubricating an idle pinion

(30) Priorité: 04.05.2006 FR 0651587
(43) Date de publication de la demande: 07.11.2007
(73) Titulaire: RENAULT S.A.S., 92100 Boulogne Billancourt (FR)
(72) Inventeur: Raoul, Michel, 78990 Elancourt (FR); Rodrigues, Philippe, 78570 Andresy (FR)

(56) Documents cités:
- GB-A- 158 759
- GB-A- 1 281 896
- JP-A- 7 035 221
- JP-A- 8 105 523
- US-A- 5 932 946
- US-B1- 6 582 127

## Description

La présente invention se rapporte au domaine des boîtes de vitesses de véhicules automobiles, et concerne plus particulièrement les dispositifs de lubrification de certains éléments de ces boîtes, notamment les pignons.

En effet, les paliers des pignons fous de boîtes de vitesses, sont principalement guidés soit par des douilles à aiguilles sur l'arbre porteur, soit au moyen d'une bague intermédiaire placée entre le pignon et l'arbre. Dans ce dernier cas, tout particulièrement, le jeu diamétral de la portée du pignon est de l'ordre de quelques dizaines de microns seulement. Le lubrifiant est généralement introduit dans un forage central ménagé dans l'arbre porteur, puis guidé vers le palier du pignon fou par un perçage radial. Ce perçage radial débouche souvent dans une gorge circulaire, ménagée sur le diamètre extérieur de l'arbre, si le pignon est monté directement sur l'arbre au moyen de douilles à aiguilles. Lorsque le pignon est monté sur une bague, celle-ci est également percée radialement, et une gorge circulaire est également ménagée sur son diamètre extérieur. Après avoir circulé dans cette succession de perçages, le fluide de lubrification est diffusé dans le palier du pignon.

Pour assurer une lubrification efficace, des gorges ou des crans sont généralement ménagés en plus de la gorge circulaire. Selon le type de montage du pignon, les crans et la gorge sont ménagés sur le diamètre extérieur de l'arbre, ou sur le diamètre extérieur de la bague insérée entre l'arbre et le pignon.

Les publications JP8105523 et JP7035221 présentent ainsi des exemples d'agencement de crans ou de gorges sur l'arbre porteur. Toutefois, la réalisation mécanique de ces usinages augmente sensiblement la complexité et le coût de fabrication de l'arbre ou de la bague insérée entre celui-ci et le pignon.

US-A-6 582 127 décrit un pignon avec les caractéristiques du préambule de la revendication 1.

La présente invention vise à mettre en oeuvre une solution moins coûteuse, permettant une lubrification efficace d'un pignon fou.

Dans ce but, elle prévoit que la portée du pignon comporte un ensemble de gorges sensiblement parallèles à l'axe de rotation du pignon.

Avantageusement, les gorges axiales s'étendent sur toute la longueur dudit pignon, et sont régulièrement réparties sur la portée dudit pignon.

Selon l'invention, les gorges axiales ménagées dans la portée du pignon sont combinées à un ensemble de gorges radiales dans le pignon, destinées à améliorer la répartition du fluide de lubrification au sein du pignon.

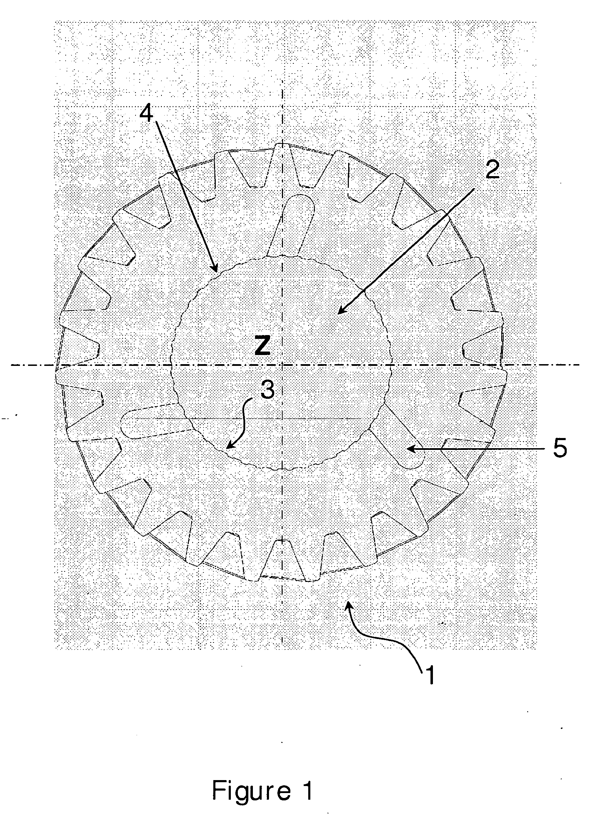

D'autres caractéristiques et avantages de l'invention ressortiront à la lecture de la description qui suit, en référence à la figure 1 annexée présentant une vue schématique en coupe d'un pignon selon l'invention, selon un plan sensiblement perpendiculaire à son axe de rotation.

Le pignon 1 de boîte de vitesses illustré par la figure, a un axe de rotation Z. Il est percé d'un orifice axial 2 permettant sa mise en place autour d'un arbre porteur (non représenté sur la figure) ou autour d'une bague (non représentée sur la figure) elle-même rapportée autour dudit arbre porteur. La surface 3 définissant l'orifice axial 2, c'est-à-dire la portée intérieure 3 du pignon 1, comporte un ensemble de gorges axiales 4. Les gorges axiales 4, d'une profondeur de l'ordre de quelques centièmes de millimètres, peuvent être réalisées par brochage ou par formage sur la pièce brute. De préférence, elles s'étendent sensiblement sur toute la longueur du pignon 1, et sont régulièrement réparties sur sa portée. Les gorges axiales 4 coopèrent avec un ensemble de gorges radiales 5, usinées dans le pignon 1, et destinées à permettre une répartition optimale du fluide de lubrification lors de la rotation du pignon 1 autour de son axe Z.

Lors de la lubrification du pignon 1, le fluide de lubrification est introduit dans un forage central de l'arbre porteur par un dispositif approprié, puis guidé, par un perçage radial réalisé dans l'arbre porteur, vers le pignon 1 ou vers la bague sur laquelle est monté le pignon 1. Si le pignon 1 est monté directement sur l'arbre porteur, le perçage radial débouche dans une gorge circulaire sur le diamètre extérieur de l'arbre.

Alternativement, si le pignon 1 est monté sur une bague placée sur l'arbre porteur, la bague est elle-même percée radialement, et ce perçage radial débouche dans une gorge circulaire ménagée sur le diamètre extérieur de ladite bague. La diffusion du fluide de lubrification s'effectue alors le long des gorges axiales 4 ménagées sur la portée intérieure 3 du pignon 1, au contact de la surface extérieure de l'arbre porteur ou de celle de la bague, selon le mode de montage dudit pignon 1.

La réalisation des gorges de diffusion 4 sur la portée intérieure du pignon, permet de diminuer sensiblement la complexité de la réalisation de l'arbre porteur ou de la bague insérée entre celui-ci et le pignon 1. La réalisation des gorges de diffusion 4 sur la portée 3 du pignon 1 étant plus facile, les coûts de revient subissent une diminution globale.

## Revendications

1. Pignon (1) d'une boîte de vitesses pour véhicule automobile, destiné à être monté directement sur un arbre porteur ou sur une bague placée autour dudit arbre porteur, dont la portée intérieure (3) comporte un ensemble de gorges (4) axiales sensiblement parallèles à son axe de rotation (Z), **caractérisé en ce que** les gorges axiales (4) sont associées à un ensemble de gorges radiales (5) permettant l'homogénéisation de la diffusion du fluide de lubrification du pignon (1).

2. Pignon (1) selon la revendication 1, **caractérisé en ce que** les gorges (4) s'étendent sensiblement sur toute la longueur du pignon (1).

3. Pignon (1) selon l'une ou l'autre des revendications 1 ou 2, **caractérisé en ce que** les gorges (4) sont régulièrement réparties sur la portée (3) du pignon (1).

4. Boîte de vitesses pour véhicule automobile comportant au moins un pignon (1) selon la revendications 1, 2 ou 3.

## Claims

1. Gear (1) of a gearbox for a motor vehicle, designed to be mounted directly on a bearer shaft or on a ring placed about the said bearer shaft, whose inner bearing surface (3) comprises a set of axial grooves (4) substantially parallel to its axis of rotation (Z), **characterized in that** the axial grooves (4) are associated with a set of radial grooves (5) making it possible to even out the distribution of the fluid for lubricating the gear (1).

2. Gear (1) according to Claim 1, **characterized in that** the grooves (4) extend substantially over the whole length of the gear (1).

3. Gear (1) according to one or other of Claims 1 or 2, **characterized in that** the grooves (4) are evenly distributed over the bearing surface (3) of the gear (1).

4. Gearbox for a motor vehicle comprising at least one gear (1) according to Claims 1, 2 or 3.

## Patentansprüche

1. Ritzel (1) eines Getriebes für ein Kraftfahrzeug, das direkt auf einer Stützwelle oder auf einem um die Stützwelle herum angeordneten Ring angebracht werden soll und dessen innere Auflagefläche (3) eine Anordnung aus axialen, im Wesentlichen parallel zu seiner Drehachse (Z) verlaufenden Nuten (4) aufweist, **dadurch gekennzeichnet, dass** die axialen Nuten (4) einer Anordnung aus radialen Nuten (5) zugeordnet sind, wodurch das Homogenisieren der Verteilung des Schmierfluids des Ritzels (1) gestattet wird.

2. Ritzel (1) nach Anspruch 1, **dadurch gekennzeichnet, dass** die Nuten (4) im Wesentlichen über die ganze Länge des Ritzels (1) verlaufen.

3. Ritzel (1) nach Anspruch 1 oder 2, **dadurch gekennzeichnet, dass** die Nuten (4) gleichmäßig über die Auflagefläche (3) des Ritzels (1) verteilt sind.

4. Getriebe für ein Kraftfahrzeug, das mindestens ein Ritzel (1) nach Anspruch 1, 2 oder 3 enthält.
